# EUROPEAN PATENT SPECIFICATION

(11) **EP 4 160 980 B1**
(45) Date of publication and mention of the grant of the patent: **28.01.2026**
(21) Application number: 21199858.8
(22) Date of filing: 29.09.2021
(51) Int. Cl.: H04L 9/32, H04L 9/00

(54) **METHOD OF SECURELY TRANSITIONING A LIFE CYCLE STAGE OF A PRODUCT TO A NEXT STAGE THROUGHOUT A FORWARD-ONLY LIFE CYCLE AND OF VERIFYING THE INTEGRITY OF DATA AND PRODUCT STATUSES**
VERFAHREN ZUM SICHEREN ÜBERGANG EINES LEBENSZYKLUSSTADIUMS EINES PRODUKTS IN EIN NÄCHSTES STADIUM WÄHREND DES GESAMTEN LEBENSZYKLUS UND ZUR ÜBERPRÜFUNG DER INTEGRITÄT VON DATEN UND PRODUKTZUSTÄNDEN
PROCÉDÉ DE TRANSITION SÉCURISÉE D'UNE ÉTAPE DU CYCLE DE VIE D'UN PRODUIT À UNE ÉTAPE SUIVANTE PENDANT UN CYCLE DE VIE AVAL ET DE VÉRIFICATION DE L'INTÉGRITÉ DE DONNÉES ET D'ÉTATS DE PRODUITS

(43) Date of publication of application: 05.04.2023
(73) Proprietor: AUMOVIO Germany GmbH, 60488 Frankfurt am Main (DE)
(72) Inventor: Stöttinger, Marc Sebastian Patric, 60488 Frankfurt am Main (DE); Wang, Yi Estelle, 60488 Frankfurt am Main (DE)
(74) Representative: Aumovio Corporation

(56) References cited:
- BERNSTEIN DANIEL J DJB@CR YP TO ET AL: "The SPHINCS+ Signature Framework", DESIGNING INTERACTIVE SYSTEMS CONFERENCE, ACM, 2 PENN PLAZA, SUITE 701NEW YORKNY10121-0701USA, 6 November 2019 (2019-11-06), pages 2129 - 2146, XP058638168, ISBN: 978-1-4503-5850-7, DOI: 10.1145/3319535.3363229
- CAMPOS FABIO ET AL: "LMS vs XMSS: Comparison of Stateful Hash-Based Signature Schemes on ARM Cortex-M4", 5 July 2020, COMPUTER VISION - ECCV 2020 : 16TH EUROPEAN CONFERENCE, GLASGOW, UK, AUGUST 23-28, 2020 : PROCEEDINGS; [LECTURE NOTES IN COMPUTER SCIENCE ; ISSN 0302-9743], SPRINGER INTERNATIONAL PUBLISHING, CHAM, PAGE(S) 258 - 277, ISBN: 978-3-030-58594-5, XP047553913
- RAHUL P. NAIK ET AL: "Optimising the SHA256 Hashing Algorithm for Faster and More Efficient Bitcoin Mining", 2 September 2013 (2013-09-02), XP055233141, Retrieved from the Internet <URL:http://www.nicolascourtois.com/bitcoin/Optimising the SHA256 Hashing Algorithm for Faster and More Efficient Bitcoin Mining_Rahul_Naik.pdf> [retrieved on 20151202]
- YOUSEFNEZHAD NARGES ET AL: "Security in product lifecycle of IoT devices: A survey", JOURNAL OF NETWORK AND COMPUTER APPLICATIONS, ACADEMIC PRESS, NEW YORK, NY, US, vol. 171, 22 August 2020 (2020-08-22), XP086328320, ISSN: 1084-8045, [retrieved on 20200822], DOI: 10.1016/J.JNCA.2020.102779

## Description

### FIELD

The present invention relates to products or components that store data, which data may change upon a forward transition throughout various stages of a product life cycle. In particular, the invention relates to securing and verifying that stored data matches the corresponding stage of the life cycle and that reverse transitions to a previous life cycle stage are prevented and/or at least detectable.

### BACKGROUND

In various fields of technology products or components store data that changes upon a forward transition throughout various stages of a product life cycle. Such components or products are generally capable of communication with an external entity through a communication interface, either directly or through interfaces provided and/or shared by other components or products. A component's or a product's life cycle may include stages such as production, customer delivery, OEM production, field application, also referred to as after sale use, and failure or end-of-life analysis. End-of-life-analysis may include general analysis for learning how the product or component was used throughout its life, while failure analysis may be relevant, e.g., when a product or component has failed before its regular end-of-life. However, end-of-life and failure analysis are sufficiently similar that both terms may be used interchangeably.

"The SPHINCS+ Signature Framework" (Bernstein, Daniel et al, Designing Interactive Systems Conference, ACM, 2 Penn Plaza, Suite 701, New York, NY 10121-0701 USA, 6 November 2019 (2019-11-06), pages 2129-2146, XP058638168, DOI: 10.1145/3319535.3363229, ISBN: 978-1-4503-5850-7) introduces a stateless hash-based signature framework. It utilizes a public/private key pair and a signature, which consists of leaf nodes and their respective authentication paths within a hypertree.

"LMS vs XMSS: Comparison of Stateful Hash-Based Signature Schemes on ARM Cortex-M4" (Campos, Fabio et al, 5 July 2020 (2020-07-05), Computer Vision - ECCV 2020: 16th European Conference, Glasgow, UK, AUGUST 23-28, 2020 : Proceedings; [Lecture Notes in Computer Science; ISSN 0302-9743], Springer International Publishing, CHAM, pages 258 - 277, XP047553913, ISBN: 978-3-030-58594-5) compares known hash-based signature schemes. LMS and XMSS are compared with regard to performance, stack consumption, and other figures for key generation, signing and verifying. Also, optimised implementations of SHA-256, SHAKE256, Gimli-Hash, and different variants of KECCAK, are introduced.

"Optimising the SHA256 Hashing Algorithm for Faster and More Efficient Bitcoin Mining" (Rahul P. Naik et al, 2 September 2013 (2013-09-02), XP055233141) discusses the optimization of the SHA256 hashing algorithm specifically tailored to the Bitcoin mining protocol.

"Security in product lifecycle of IoT devices: A survey" (Yousefnezhad, Narges et al, Journal of Network and Computer Applications, D4 Academic Press, New York, NY, USA, vol. 171, 22 August 2020 (2020-08-22), XP086328320, ISSN: 1084-8045, DOI: 10.1016/J.JNCA.2020.102779) reviews Internet of Things (IoT) security with respect to product lifecycle stages. State-of-the-art solutions for addressing product lifecycle security in IoT are presented, such as IoT product lifecycle security, security taxonomy in IoT product lifecycle, and security solutions for each lifecycle phase in product lifecycle stages.

In the following description, the terms "component" or "product" are used synonymously, as a product may comprise one or more components storing data that changes upon transitions between product life cycle stages.

The data that is stored may be sensitive data that may be used only during the respective stage of the life cycle, and further may only be used by authorized entities during any respective stage. Such sensitive data may include data required for testing or executing security functions or features, e.g., cryptographic keys, access credentials and the like.

It is obvious that during production of a component or product some testing of such function relying on or using the sensitive data may need to be performed, for ensuring proper operation of the component or product. Likewise, some testing may be performed after the product or component is received by an OEM manufacturer, prior to implementing the product or component in another product that is sold to a customer. Also, advanced testing and diagnostic capabilities of a product or component may only be available for end-of-life analysis, after which a product or component must not be returned into regular service. However, it may be incompatible with the goal of keeping sensitive data secret if such sensitive data is made available to too many entities during the product or component life cycle.

For example, any sensitive data that may be used during production of a component may be accessed by the maker of the component, but must not be handed over to the customer. Readout of such sensitive data may be prevented by security mechanisms implemented in the component, and the sensitive data may be replaced with a customer's sensitive data once the component is received.

The customer may use the component for developing a more complex further product that comprises or implements the component. This may likewise require some testing of the component in the context of the more complex further product, using appropriate sensitive data. Once the development of the more complex further product is finished and it is ready for production, either by the customer or by a third party, e.g., an OEM manufacturer, the sensitive data in the component will be replaced with corresponding data that is adapted for testing during production of the more complex further product. Thus, when the more complex further product is received at the production facility, the sensitive data may be replaced with the OEM manufacturer's sensitive data.

Once the more complex further product is produced and is ready to be sold to the user or, more broadly, ready for use in the field, sensitive data required for operating the more complex further product comprising or implementing the component may be stored in the component. Operating may include field testing and field diagnostics. Storing the sensitive data for field-use may be done by the user or by the producer on demand of the user.

Finally, sensitive data for operating the more complex further product in a mode that provides access to more advanced testing and diagnostics at the end-of-life of the product may replace the sensitive data for field-use. This may be limited to a trusted and authorized entity, e.g., because such advanced testing and diagnostics may reveal sensitive information from earlier stages.

From the example above it is obvious that each stage's sensitive data is to be kept secret from other parties having control during other stages, and that going back to a previous stage is to be prevented, because re-selling a used or otherwise compromised product may be dangerous in security- or safety-relevant applications. Preventing returning to previous stages of a product life cycle is referred to in the following as forward-only life cycle.

It is an object of the present invention to provide a data structure enabling validating a current life cycle stage and securely transitioning a life cycle stage of a product to a next life cycle stage in a forward-only direction. It is a further object of the invention to provide methods of securely transitioning a life cycle stage and of securing and verifying the integrity of data and device statuses throughout the various life cycle stages of a forward-only life cycle of a product.

### SUMMARY OF THE INVENTION

These objects are achieved by the methods of claims 1 and 4. Advantageous embodiments and developments of the methods are presented in the respective dependent claims.

In accordance with a first aspect of the present invention, a method for transitioning a product from a current life cycle stage to a next life cycle stage comprises receiving, from a requesting entity and at the product, a request to provide a current life cycle stage. In response to the request the product provides the current life cycle stage as well as a life cycle certificate implementing a Merkle tree-based data structure to the requesting entity.

The Merkle tree-based data structure comprises a life cycle stage index field, a first-level hash value or a reference to the first-level hash value, at least one second-level hash value or a reference to the at least one second-level hash value, a third-level hash value, and a further third-level hash value or a corresponding reference to the latter, and a control hash value. The control hash value is a hash value of the concatenation of the index field, the first-level hash value or the reference thereto, the at least one second-level hash value or the reference thereto, the third-level hash value and the further third-level hash value or the reference thereto. The control hash value prevents any manipulation of individual fields of the data structure, ensuring its integrity.

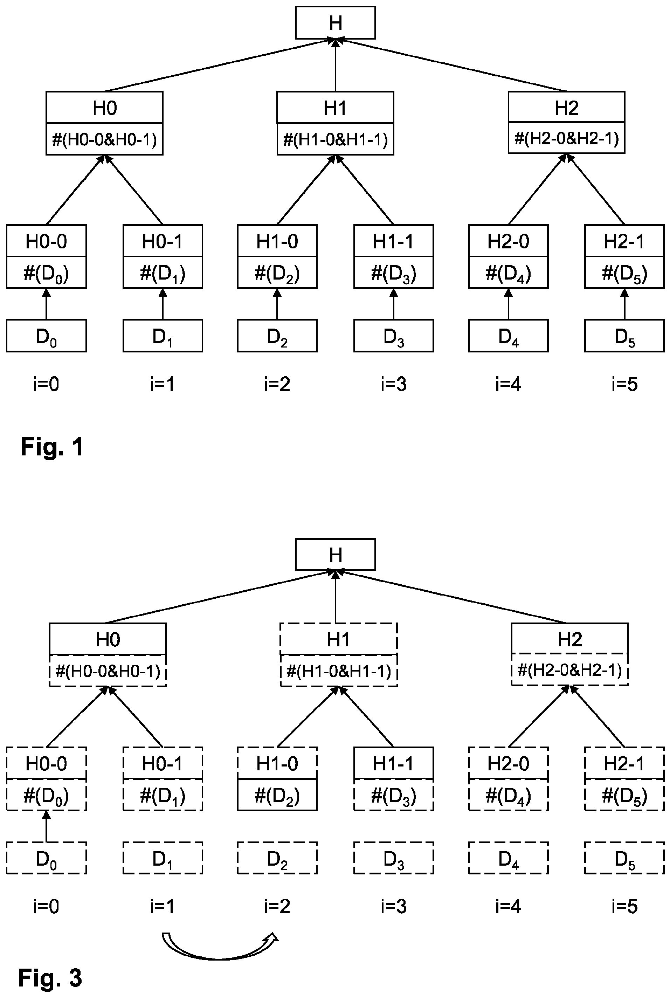

An exemplary Merkle tree showing the relation of some elements of the data structure to nodes of the Merkle tree, or hash tree, is shown in figure 1. The leaf nodes of the Merkle tree, in the present data structure the third-level hash values H0-0, H0-1, H1-0, H1-1, H2-0 and H2-1, comprise hash values #(D₀) to #(D₅) of corresponding data blocks D₀ to D₅. The data blocks D₀ to D₅ may store sensitive data, e.g., operating software and/or parameters, access credentials, crypto keys, secrets, signatures and the like, pertaining to different life cycle stages of a product, represented by the index i. The life cycle stages may, e.g., correspond to a device production stage, an OEM customer delivery stage, an OEM production stage, e.g., in which the device is integrated into a product, a field application stage, or use stage, a failure analysis stage, and a further stage.

The second-level hash values H0, H1, H2, which are non-leaf node hash values, each comprise a hash value of those third-level hash values H0-0, H0-1, H1-0, H1-1, H2-0 and H2-1 they are connected to. In figure 1 the second level hash value H0 comprises a hash value of third-level hash values H0-0 and H0-1, the second level hash value H1 comprises a hash value of third-level hash values H1-0 and H1-1, and the second level hash value H2 comprises a hash value of third-level hash values H2-0 and H2-1. The first-level hash value H comprises a hash value of the second-level hash values H0, H1 and H3.

The index field i of the data structure represents the index of the life cycle stage. The data structure may also comprise a field for additional data. In this case, the concatenation of the various fields for determining the control hash value includes the field for additional data.

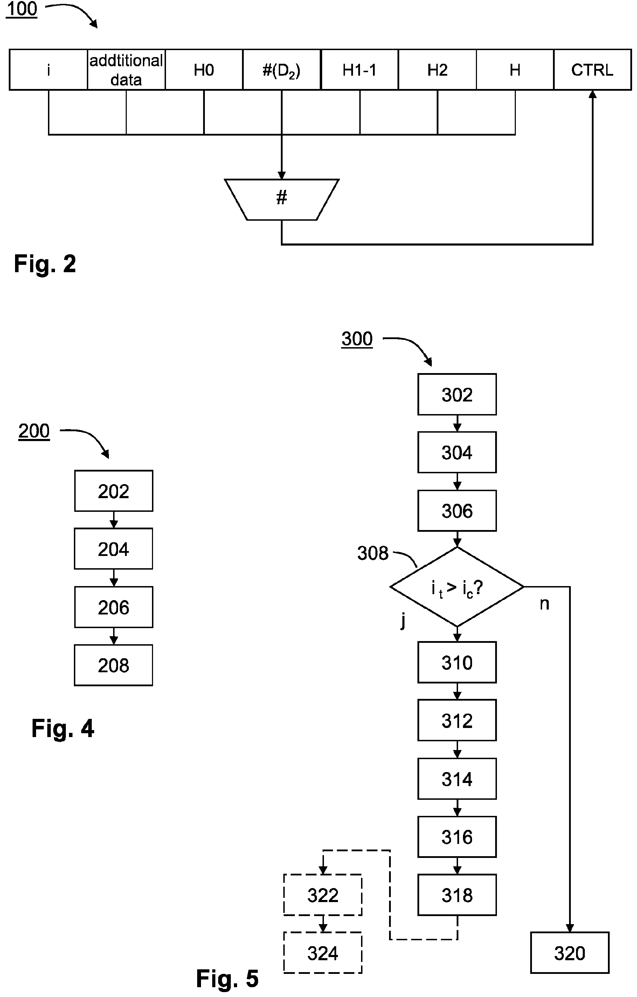

Figure 2 shows an exemplary data structure of a preferred embodiment of the Merkle tree-based data structure. The data structure includes the various fields and hash values in the following sequence: The index field i, the field for additional information or data, the second-level hash value H0, the third-level hash value for index i=2, the further third-level hash value or the reference thereto for index i=3, the second level hash value H2, the first-level hash value and finally the control hash value. As is readily apparent the second-level hash value H1, which includes the third-level hash value associated with the current life cycle stage, is replaced with the third-level hash value of the current life cycle stage and the third-level hash value or the reference thereto of the next life cycle stage. Generally, the second-level hash values or references thereto are provided in ascending order, unless replaced by the underlying third-level hash values or references thereto, which are likewise arranged in ascending order. However, other predetermined sequences may also be used. Note that the exemplary data structure shown in figure 2 corresponds to a life cycle certificate transmitted by the product after the transition from life cycle stage index 1 to life cycle stage index 2.

The various fields and hash values of the data structure may be separated by predetermined characters or codes, or may have a predetermined length, which may be padded with default data in case the actual content does not use the full space provided.

Referring to the method according to the first aspect of the present invention, the life cycle stage and the data structure may be retrieved from a memory of the product, or may be generated, in response to the request, based on data stored in a memory of the product. In the former case, the data structure had previously been generated and stored. If the life cycle certificate comprises any actual third-level hash value of any other than the present life cycle stage, at least the third-level hash values of all but the present life cycle stage need to be stored in the product, allowing for determining the second- and first-level hash values in the product. It is, however, also possible to store all hash values in the component or product. If the life cycle certificate comprises references to the various hash values, only the appropriate references need to be stored in the product.

The requesting entity may use the information provided for verifying the life cycle stage, e.g., prior to continuing the transition. This might be implemented by sending a request to the product, asking to provide the current life cycle stage. Then, receiving, from the product, the current life cycle stage and a life cycle certificate implementing the data structure, reconstructing the path through the Merkle tree based on the first-, second- and third-level hash values or references thereto provided in the life cycle certificate, determining the corresponding life cycle stage index, and verifying if the received life cycle stage index provided matches the determined life cycle stage index. If the received life cycle index and the life cycle index determined from the other information provided in the life cycle certificate match, the current life cycle stage is verified.

A requesting entity in this context may be any device that is at least temporarily communicatively connected with the product. The communication connection may be wired or wireless and may use any suitable communication protocol. Likewise, the communication between the requesting entity and the product may be direct or via intermediate communication nodes.

The life cycle stage index and the life cycle certificate may be retrieved from a memory of the product, or may be generated, in response to the request, based on data stored in a memory of the product. In the former case, the life cycle certificate had previously been generated and stored.

If the requesting entity is the entity associated with the current life cycle stage, it may use all information provided in the life cycle certificate except for the index field and the third-level hash value of the current life cycle stage for determining the control hash value. The index is replaced with the index received in response to the request, and the third-level hash value associated with the current life cycle stage provided in the received life cycle certificate is replaced with a hash value of the sensitive data that the requesting entity knows should be stored in the product, which hash value of the known sensitive data is determined by the requesting entity. If the control hash provided in the life cycle certificate and the control hash determined by the requesting entity match, i.e., are equal, the life cycle stage reported by the product is valid. Otherwise, the reported life cycle stage is invalid, and the product may not be used in the current life cycle stage or is defective and may need to be discarded.

Accordingly, if the requesting entity is the entity associated with the next life cycle stage, it may use all information provided in the life cycle certificate except for the index field and the third-level hash value of the next life cycle stage for determining the control hash value. The index is replaced with the index received in response to the request, and the third-level hash value associated with the next life cycle stage provided in the received life cycle certificate is replaced with a hash value of the sensitive data that the requesting entity knows will or should be stored in the product in the next life cycle stage, which hash value is determined by the requesting entity. If the control hash provided in the life cycle certificate and the control hash determined by the requesting entity match, the life cycle stage reported by the product is valid. Otherwise, the reported life cycle stage is invalid, and the product may not be transitioned to the next life cycle stage or is defective and may need to be discarded.

As only hash values or information known to the respective requesting entity are used, the information provided in the data structure allows for secure verification of a current life cycle stage without the need to reveal or have knowledge of any sensitive data of other life cycle stages.

Alternatively, it may be sufficient to use, in the requesting entity, all data from the received life cycle certificate except for the life cycle stage, which is replaced by the one received in response to the request, for determining the control hash, and to compare the control hash with the one from the received life cycle certificate. This would reveal any tampering in which a malicious software or a man-in-the-middle sends a life cycle stage and appends a certificate received from the product.

The method according to the first aspect of the invention further comprises receiving, at the product, a request to transition to a target life cycle stage, typically a life cycle stage having a higher index than the current one. The product verifies if the target life cycle stage received in the request is higher than the present life cycle stage. In the positive case, i.e., if the target life cycle stage is higher than the current life cycle stage, the current life cycle certificate or information how to compose or generate the current life cycle certificate may be deleted, and an index counter representing the current life cycle stage is incremented to the index corresponding to the target life cycle stage.

The index counter may preferably be provided in a protected memory area, that cannot be easily accessed through the communication interface. The protected memory may include OTP memory, i.e., memory whose content can only be written once. Likewise, the computer program instructions that increment the index counter are preferably stored in and executed from a protected memory area, for preventing tampering.

Prior to or after incrementing the index counter new sensitive data for the target life cycle stage may be stored in the memory of the component. Further, information for generating a life cycle certificate for the new life cycle stage is determined, i.e., the path through the Merkle tree upon which the life cycle certificate is based, and a new life cycle certificate is generated. The new life cycle certificate and the new current life cycle stage index are then provided to the requesting entity.

If the target life cycle stage is not higher than the current life cycle stage the request is ignored.

Advantageously, the hash values of the data structure may be determined in accordance with secure hash algorithms, e.g., SHA-256, SHA-512 or SHAKE hash functions, although other hash functions may also be used, e.g., hash operations based on special operation modes of symmetric block or stream ciphers, for calculating cryptographic hash values of at least 128 bit width, including a Davis-Meyer-Hash operation in combination with AES-128.

In case the data structure comprises actual hash values, all information required for validating or transitioning is included in the message.

If, however, references to hash values and actual hash values are provided in the data structure, the data structure rather provides a correct path through the Merkle tree. Hash values that are only referenced to in the data structure need to be obtained from other sources or may be determined based on data known to the validating entity. The data structure thus provides some information or representations of information, respectively, currently available in the product, and otherwise provides information which data is further needed for verification. This data may be obtained from entities associated with other life cycle stages. Since the required information does not comprise real sensitive data, but only the hashes thereof, this information can be provided through relatively insecure channels. The validity of the complementary data can always be verified against the first-level hash, which is stored in and may be provided by the product, which itself is considered a trusted source. Embodiments of the present invention using this type of content in the data structure provide an additional level of security, since the missing information needs to be provided by various different entities authorized for other life cycle stages, which involves further communication and may involve additional authentication checks.

In order to transition from one life cycle stage to the next life cycle stage, e.g., from a life cycle stage having index 1 to the next life cycle stage having index 2, e.g., from an OEM customer delivery stage to an OEM production stage, sensitive data stored in the component for delivery and testing by the OEM may need to be replaced by data that is needed for integration into an OEM product. Such replacement typically goes along with transitioning the life cycle stage. As discussed further above it is preferred that a product cannot be returned to an earlier life cycle stage. Since the memory in products typically cannot and need not permanently store all kind of data that may be used throughout different life cycle stages, but rather store only data that is needed in a current life cycle stage, some proof has to be provided for showing that a product is or had been in a particular life cycle stage, ideally in a way that is safe against tampering and that does not reveal any information that could be used for reverse engineering data. This proof may be provided by the product itself using the data structure, dispensing with the requirement of keeping a record at some place outside the product.

It is well known that special forms of hash functions belonging to the group of cryptographic hash functions can produce representations of large amounts of data that are unique and unambiguous, which representations occupy only relatively little memory space and do not permit identifying or determining the data they are based on. Thus, retaining only the small-sized hash value of the data of life cycle stages in the memory of the product allows for using the major part of the memory for data relevant for a current life cycle stage, while keeping a unique and unambiguous proof that sensitive data of an earlier life cycle stage had been previously stored in the product, ultimately showing that the product had been in that life cycle stage.

Such cryptographic hash values can be calculated with relatively small effort, but reconstructing the underlying data from a hash value is considered impossible, which is why such special hash functions are considered resistant to quantum computer-based attacks.

In one or more embodiments of the method, the requesting entity may verify if the transition was successful by determining the life cycle certificate for the target life cycle stage based on data from the life cycle certificate received prior to requesting the transition, the index of the targeted life cycle stage and the sensitive data for the target life cycle stage transmitted to the product, and comparing the life cycle certificate received from the product after the transition with the one determined before. If the two life cycle certificates are identical, the transition is successfully completed. It may be sufficient to compare the control hashes of the life cycle certificates, which may reduce the required amount of processing at least for the comparison. The requesting entity thus uses information provided by the product relating to a life cycle stage prior to the request for transition as well as information relating to the target life cycle stage that is known in the requesting entity, for predicting an expected life cycle certificate after successful transition. The requesting entity may store the received life cycle certificate associated with the product for later use.

In accordance with a second aspect of the invention a method of verifying the validity of a life cycle certificate of a product comprises receiving, from a requesting entity and at the component, a request to verify a life cycle certificate which implements the above described Merkle tree-based data structure. The request may comprise the life cycle certificate to be verified, or the life cycle certificate is received in a separate transmission after acknowledging the request. The life cycle certificate to be verified may typically be for an assumed present life cycle stage of the product. The product verifies if the life cycle stage index of the life cycle certificate to be verified corresponds to the current value of the life cycle stage index as present in the index counter of the product. If the result of the verification is positive, the product compares the life cycle certificate with the one stored in the memory of the device or one that is determined from information stored in the memory of the product in accordance with information for generating the life cycle certificate stored in the product. If the two life cycle certificates match, e.g., are identical, the product responds with a message indicating that the life cycle certificate received for verification is valid. Otherwise, if either the index does not match the value of the index counter or the life cycle certificates are not equal, the product responds with a message indicating that the transmitted life cycle certificate is no longer valid. A life cycle certificate that is no longer valid may be revoked.

Advantageously, the hash values of the data structure used in accordance to the second aspect of the invention may be determined in accordance with secure hash algorithms, e.g., SHA-256, SHA-512 or SHAKE hash functions, although other hash functions may also be used, e.g., hash operations based on special operation modes of symmetric block or stream ciphers, for calculating cryptographic hash values of at least 128 bit width, including a Davis-Meyer-Hash operation in combination with AES-128.

In one or more embodiments of the methods according to the invention a requesting entity may need to go through an authentication and/or authorization process before the product accepts a request. If the authentication or authorization fails, the request is ignored. In order to prevent brute-force attacks on the authentication or authorization, generally known mechanisms may be employed, e.g., increasing delay times between attempts and/or a maximum permissible number of failed attempts for each user.

A computer program product comprises computer program instructions which, when executed by a computer, cause the computer to execute the methods in accordance with one of the methods according to aspects of the invention presented hereinbefore.

The computer program product may be stored on a computer-readable medium or data carrier. The medium or the data carrier may by physically embodied, e.g., in the form of a hard disk, solid state disk, flash memory device or the like. However, the medium or the data carrier may also comprise a modulated electro-magnetic, electrical, or optical signal that is received by the computer by means of a corresponding receiver, and that is transferred to and stored in a memory of the computer.

As the trusted source for the first-level hash value is the product itself the present data structure and the methods using the data structure do not rely on an external key infrastructure, which reduces possible attack vectors. In addition, the data structure allows for local verification of life cycle certificates without having to access a remote data base.

### BRIEF DESCRIPTION OF THE DRAWINGS

In the following the invention will be described with reference to the drawing, in which
- Fig. 1: shows an exemplary Merkle tree upon which the data structure according to the invention is built,
- Fig. 2: shows an exemplary life cycle certificate implementing the data structure according to the invention,
- Fig. 3: shows the data structure according to the invention with the information that needs to be provided by the requesting entity for effecting a transition from life cycle index 1 to life cycle index 2,
- Fig. 4: shows an exemplary flow diagram of a method for verifying a current life cycle stage of a product,
- Fig. 5: shows an exemplary flow diagram of a method of securely transitioning a current life cycle stage of a product to a target life cycle stage in a forward-only direction,
- Fig. 6: shows an exemplary message flow diagram between a requesting entity and a product when transitioning a life cycle stage in accordance with the method discussed with reference to figure 5,
- Fig. 7: shows an exemplary flow diagram of a method for verifying the validity of a life cycle certificate implementing a data structure in accordance with the invention,
- Fig. 8: shows an exemplary message flow diagram between a requesting entity and a product when verifying a life cycle certificate in accordance with the method discussed with reference to figure 7, and
- Fig. 9: shows an exemplary block diagram of a product adapted to execute product-side steps of methods presented hereinbefore.

In the figures identical or similar elements may be labelled with the same reference designators.

### DETAILED DESCRIPTION OF PREFERRED EMBODIMENTS

Figures 1 and 2 have been described further above and will not be referred to in detail again.

Figure 3 shows the data structure according to the invention with the information that needs to be provided by the requesting entity for effecting a transition from life cycle index 1 to life cycle index 2. Information to be provided is shown in text boxes with solid outlines, information that does not need to be provided is represented in text boxes with dashed lines. Any data D₀...D₅, which may represent signatures or other sensitive data, underlying those hash values not belonging to the next life cycle index need not be provided by or even known to the requesting entity.

In the example, the requesting entity is the one associated with life cycle index 2. It may have received the product from a supplier associated with life cycle index 1 and is now ready to store its own sensitive data in the product and to trigger the transition to life cycle index 2. The requesting entity may first send a request to the product, inquiring a current life cycle index of the product, e.g., for ensuring that the product has a correct life cycle index, or at least a life cycle index that is lower than the target life cycle index. The product responds by transmitting the requested information along with a life cycle certificate of the present life cycle stage. From the received life cycle index and life cycle certificate the requesting entity can determine which information must be provided to the product in the next step.

The first level hash H is provided in the life cycle certificate. However, in order to be able to calculate the first-level hash H, the second-level hashes H0, H1 and H2 must be known. As these do not impart any information about the sensitive data they represent, they may be provided in the life cycle certificate or obtained through other channels. The validity of the second-level hashes can be verified by concatenating and hashing them, and comparing the result with the first-level hash provided in the life cycle certificate. A source providing a second-level hash that results in a successful verification can be considered a trusted source.

The requesting entity now sends a request to transition the life cycle index to a target life cycle index.

The request may include the sensitive data associated with the target life cycle index, or the hash value thereof, as well as the third-level hash value H1-1 and the second level hash values H0 and H2. The hash value H1-1 may be provided to the requesting entity by the entity authorized for the subsequent life cycle stage. As it does not impart any information about the underlying data, the sensitive data from the other authorized entity remains secret.

The data received in the request enables the product to verify that the requesting entity is actually authorized to initiate a transition to a higher life cycle index. For verifying, the product determines the third-level hash value H1-0 from the received sensitive data, or uses the hash value provided in the request, determines the second level hash value H1 from the received or previously determined third-level hash value H1-0 and the third-level hash value H1-1 received in the request, and determines the first-level hash value H from the previously determined second-level hash value H1 and the second-level hash values H0 and H2 received in the request. The so-determined first level-hash-value H is compared with a first-level hash value stored in the product. If both hash values match, the request is legit and may be executed.

Figure 4 shows an exemplary flow diagram of a method 200 for verifying a current life cycle stage of a component. The method comprises, in step 202, sending a request to the product, asking to provide the product's current life cycle stage, and receiving, in step 204, the current life cycle stage and a life cycle certificate as discussed with reference to figure 2. The requesting entity then verifies if the life cycle stage index included in the received life cycle certificate matches the one provided in response to the request. In the positive case, the reported life cycle stage is verified, otherwise the product may be defective and may need to be discarded. In the figure, this includes reconstructing the path through the Merkle tree and determining the corresponding life cycle stage index in step 206, and verifying, in step 208, if the the received life cycle stage index matches the determined life cycle stage index.

Figure 5 shows an exemplary flow diagram of a method 300 of securely transitioning a current life cycle stage of a product to a target life cycle stage in a forward-only direction. In step 302 the product receives, from a requesting entity, a request to provide a current life cycle stage index (i_{c}). In response to the request the product provides, in step 304, a current life cycle stage index (i_{c}) and a life cycle certificate. The requesting entity may verify the information provided in the received data, e.g., as discussed with reference to figure 4. Next, in step 306, the product receives a request to transition to a target life cycle stage. The product verifies, in step 308, if the target life cycle stage index (it) is higher than the current life cycle stage index (i_{c}). In the positive case, "yes"-branch of step 308, the product sets the target life cycle index (it) received in the request as the current life cycle stage index (i_{c}), stores new sensitive data in the product that replaces the sensitive data associated with the previous life cycle stage index in step 312, and generates and at least temporarily stores a third-level hash value representing the new sensitive data in step 314. In step 316 the product determines information for generating a new life cycle certificate, i.e., a path through the Merkle tree upon which the data structure is based, and generates a new life cycle certificate. In step 318 the product provides the new, now current life cycle stage index (i_{c}) and the new life cycle certificate to the requesting entity. If the target life cycle stage index (it) is not higher than a current life cycle stage index (i_{c}), "no"-branch of step 308, the request is ignored, step 320.

The requesting entity may, in step 322, determine, based on the life cycle stage index and the life cycle certificate received in response to the initial request as well as from the target life cycle stage and sensitive data transmitted to the product, a life cycle certificate and, in step 324, compare the previously determined life cycle certificate with the life cycle certificate received from the product after the transition. If the life cycle certificates are identical, the transition was completed successfully. However, other ways of verifying that the update was successful are possible, e.g., by checking if the hash value for the transmitted sensitive data corresponds to the hash value determined in the requesting entity and reported in the life cycle certificate, and/or if the path through the data structure transmitted in the life cycle certificate is correct.

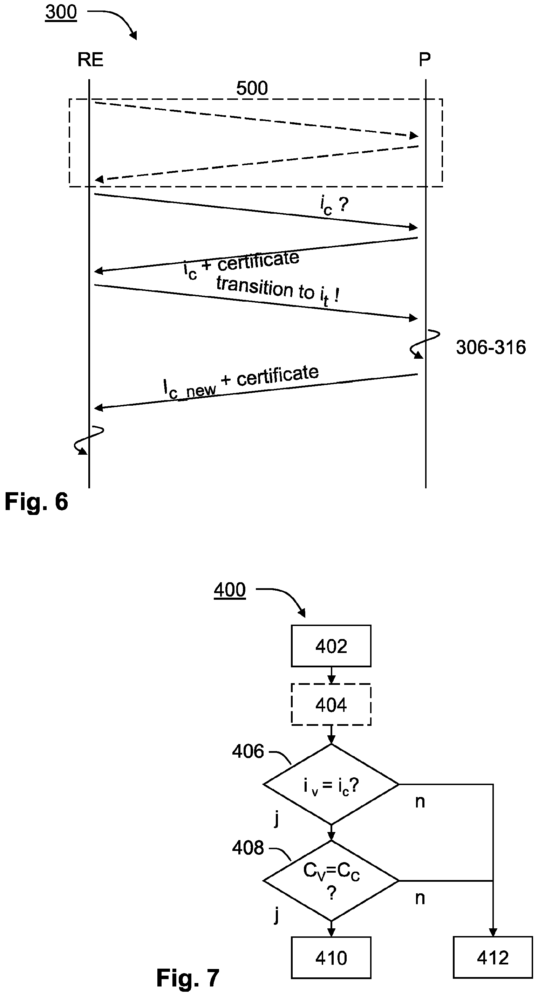

Figure 6 shows an exemplary message flow diagram between a requesting entity RE and a product P when transitioning a life cycle stage in accordance with the method discussed with reference to figure 5. Prior to executing the actual steps of the method, an authentication and authorisation may be executed or, more generally, an access control scheme 500, which may involve sending a challenge and receiving a response. In case access is denied, the product P will reject any request. The access control scheme may be optional and is shown only exemplarily in dashed lines.

As discussed before, a request to provide a current life cycle stage index is sent to the product P, which responds by providing the current life cycle stage index as well as a current life cycle certificate. The requesting entity RE now sends a request to transition to the target life cycle stage to the product P, which executes steps 306 to 316, or 320, for that matter, and provides the new current life cycle stage index and the new life cycle certificate to the requesting entity RE. The requesting entity RE may then execute steps 322 and 324 for checking of the transition was successful.

Figure 7 shows an exemplary flow diagram of a method 400 for verifying the validity of a life cycle certificate implementing a data structure in accordance with the invention. In step 402 the product P receives, from a requesting entity RE, a request to verify a life cycle certificate. If the life cycle certificate to verify was not received along with the request it is received in a separate step 404 from the requesting entity RE. In step 406 the product P compares a life cycle stage index included in the received life cycle certificate with a current life cycle stage index of the product P, as indicated by a life cycle stage index counter provided in the product P. If the life cycle stage indices are equal, "yes"-branch of step 406, the product P compares, in step 408, the received life cycle certificate with a life cycle certificate retrieved from a memory of the product P or generated by the product P based on information stored in a memory of the product P. If the life cycle certificates are equal, "yes"-branch of step 408, the product P responds to the requesting entity RE that the life cycle certificate is valid. Otherwise, i.e., if the life cycle stage indices or the life cycle certificates are not identical, the product P responds to the requesting entity RE that the life cycle certificate is invalid.

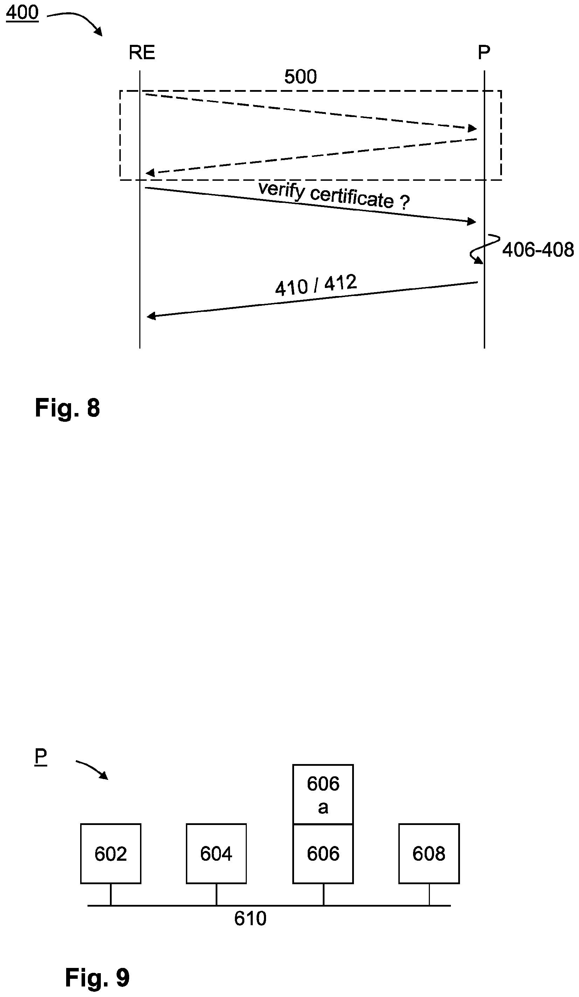

Figure 8 shows an exemplary message flow diagram between a requesting entity RE and a product P when verifying a life cycle certificate in accordance with the method 400 discussed with reference to figure 7. Prior to executing the actual steps of the method, an authentication and authorisation may be executed or, more generally, an access control scheme 500, which may involve sending a challenge and receiving a response. In case access is denied, the product P will reject any request. The access control scheme may be optional and is shown only exemplarily in dashed lines.

As discussed before, the requesting entity RE sends a request to the product P, asking to verify a life cycle certificate. If the life cycle certificate to verify was not received along with the request it is sent in a separate message, e.g., after an acknowledge signal from the product P. The product executes steps 406 to 408 of the method 400, and responds by either responding that the life cycle certificate is valid or invalid.

Figure 9 shows an exemplary block diagram of a product P adapted to execute product-side steps of the methods 300 and/or 400 presented hereinbefore. The product P comprises a microprocessor 602, a volatile memory 604, a non-volatile memory 606 and a communication interface 608, which are communicatively connected via at least one data connection or bus 610. The product P further comprises a secure memory area 616a for tamperproof storing a life cycle stage index counter value and optionally computer program instructions for tamperproof incrementing the life cycle stage index counter. The non-volatile memory 606 stores computer program instructions which, when executed by the microprocessor 602, cause the product P to execute product-side steps of the methods 300 and/or 400 of the present invention as presented above.

### LIST OF REFERENCE NUMERALS (Part of the description)

- 100: data structure
- H: first-level hash value
- H0, H1, H2: second-level hash value
- H0-0, H0-1, H1-0, H1-1, H2-0, H2-1: third-level hash value
- CTRL: control hash value
- P: product
- RE: requesting entity
- i: life cycle stage index
- 200: method
- 202: sending request
- 204: receiving current life cycle stage and certificate
- 206: reconstructing path through Merkle tree
- 208: verifying
- 300: method
- 302: receiving request
- 304: providing current life cycle stage and certificate
- 306: receiving request to transition
- 308: verifying target life cycle stage
- 310: setting life cycle stage
- 312: storing new sensitive data
- 314: generating third-level hash value
- 316: determining path
- 318: providing life cycle index and certificate
- 320: ignoring request
- 322: determining life cycle certificate
- 324: comparing received and determined life cycle certificates
- 400: method
- 402: receiving validation request
- 404: receiving life cycle certificate for verification
- 406: comparing received life cycle index with life cycle index stored in product
- 408: comparing received life cycle certificate with life cycle certificate in product
- 410: respond "valid"
- 412: respond "invalid"
- 602: microprocessor
- 604: volatile memory
- 606: non-volatile memory
- 606a: secure memory area
- 608: communication interface
- 610: data line/bus

## Claims

1. A method (300) of securely transitioning a life cycle stage of a product (P) to a target life cycle stage in a forward-only direction using a Merkle tree-based data structure (100), the data structure (100) comprising:
- a life cycle stage index (i),
- a first-level hash value (H) or a reference to the first-level hash value (H),
- at least one second-level hash value (H0, H1, H2) or a reference to the at least one second-level hash value (H0, H1, H2),
- a third-level hash value (#(D₀), #(D₁), #(D₂), #(D₃), #(D₄), #(D₅)), and a further third-level hash value (#(D₀), #(D₁), #(D₂), #(D₃), #(D₄), #(D₅)) or a corresponding reference (H0-0, H0-1, H1-0, H1-1, H2-0, H2-1) to the latter, the third-level hash values (#(D₀), #(D₁), #(D₂), #(D₃), #(D₄), #(D₅)) representing hashes of corresponding sensitive data associated with a respective value of the life cycle index (i), and
- a control hash value (CTRL), the control hash being a hash value of the concatenation of the index field (i), the first-level hash value (H) or the reference thereto, the at least one second-level hash value (H0, H1, H2) or the reference thereto, the third-level hash value (#(D₀), #(D₁), #(D₂), #(D₃), #(D₄), #(D₅)) and the further third-level hash value (#(D₀), #(D₁), #(D₂), #(D₃), #(D₄), #(D₅)) or the reference (H0-0, H0-1, H1-0, H1-1, H2-0, H2-1) thereto,
**characterized in that** the method (300) comprises:
a) receiving (302), from a requesting entity (RE) and at the product (P), a request to provide a current life cycle stage index (i_{c}),
b) providing (304), to the requesting entity (RE), a current life cycle stage index (i_{c}) and a life cycle certificate implementing the data structure (100),
c) receiving (306), at the product (P), a request to transition to a target life cycle stage,
d) verifying (308) if the target life cycle stage index (it) is higher than the current life cycle stage index (i_{c}),
wherein, if the target life cycle index (it) is higher than a current life cycle stage index (i_{c}), the method comprises:
e) setting (310) the target life cycle index (it) received in the request as the current life cycle stage index (i_{c}),
f) storing (312) new sensitive data in the product (P) that replaces the sensitive data associated with the previous life cycle stage index,
g) generating (314) and at least temporarily storing a third-level hash value representing the new sensitive data,
h) determining (316) information for generating a new life cycle certificate implementing a data structure (100) in accordance with claim 1 or 2, and generating the new life cycle certificate,
i) providing (318) the current life cycle stage index (i_{c}) and the new life cycle certificate generated in step h) to the requesting entity (RE),
or wherein, if the target life cycle stage index (it) is not higher than a current life cycle stage index (i_{c}), the method comprises:
i) ignoring (320) the request.

2. The method (300) of claim 1, further comprising:
k) determining (322), in the requesting entity (RE) and based on the life cycle stage index and the life cycle certificate provided in step b) as well as from the target life cycle stage and sensitive data transmitted to the product (P), a life cycle certificate, and
l) comparing (324) the life cycle certificate determined in step j) with the life cycle certificate provided by the product (P) in step h),
wherein, if the determined and the provided life cycle certificates are identical, the transition is successfully completed.

3. The method (300) of one of claims 1 or 2, wherein the hash values of the data structure (100) are determined in accordance with cryptographic hash functions including SHA-256, SHA-512 or SHAKE hash functions, or with special operation modes of symmetric block or stream ciphers for calculating cryptographic hash-values preferably of at least 128 bit width.

4. A method (400) of verifying the validity of a product's life cycle certificate using a Merkle tree-based data structure (100), the data structure (100) comprising:
- a life cycle stage index (i),
- a first-level hash value (H) or a reference to the first-level hash value (H),
- at least one second-level hash value (H0, H1, H2) or a reference to the at least one second-level hash value (H0, H1, H2),
- a third-level hash value (#(D₀), #(D₁), #(D₂), #(D₃), #(D₄), #(D₅)), and a further third-level hash value (#(D₀), #(D₁), #(D₂), #(D₃), #(D₄), #(D₅)) or a corresponding reference (H0-0, H0-1, H1-0, H1-1, H2-0, H2-1) to the latter, the third-level hash values (#(D₀), #(D₁), #(D₂), #(D₃), #(D₄), #(D₅)) representing hashes of corresponding sensitive data associated with a respective value of the life cycle index (i), and
- a control hash value (CTRL), the control hash being a hash value of the concatenation of the index field (i), the first-level hash value (H) or the reference thereto, the at least one second-level hash value (H0, H1, H2) or the reference thereto, the third-level hash value (#(D₀), #(D₁), #(D₂), #(D₃), #(D₄), #(D₅)) and the further third-level hash value (#(D₀), #(D₁), #(D₂), #(D₃), #(D₄), #(D₅)) or the reference (H0-0, H0-1, H1-0, H1-1, H2-0, H2-1) thereto,
**characterized in that** the method (400) comprises:
- receiving (402) from a requesting entity (RE) and at the product (P), a request to verify a life cycle certificate implementing the data structure (100),
- if the life cycle certificate to verify was not received along with the request, receiving (404) from the requesting entity (RE) and at the product (P), the life cycle certificate to verify,
- comparing (406) the life cycle stage index (i) included in the received life cycle certificate with a current life cycle stage index (i_{c}) of the product (P), and
if the life cycle stage indices (i, i_{c}) are equal:
- comparing (408), at the product (P), the received life cycle certificate with a life cycle certificate retrieved from a memory of the product (P) or generated by the product (P) based on information stored in a memory of the product (P), and
if the life cycle certificates are identical:
- responding (410) to the requesting entity (RE) that the life cycle certificate is valid,
or
if the life cycle stage indices are not equal or if the life cycle certificates are not identical:
- responding (412) to the requesting entity (RE) that the life cycle certificate is invalid.

5. The method (400) of claim 4, wherein the hash values of the data structure (100) are determined in accordance with cryptographic hash functions including SHA-256, SHA-512 or SHAKE hash functions, or with special operation modes of symmetric block or stream ciphers for calculating cryptographic hash-values preferably of at least 128 bit width.

6. The method (300, 400) of any one of the preceding claims 1 to 5, further comprising:
- executing an access control scheme for authenticating and/or authorizing between the requesting entity (RE) and the product (P), and
- accepting a request in the product (P) upon a successful authentication and/or authorization or
- rejecting the request.

7. A product (P) comprising a microprocessor (602), a volatile (604) and a non-volatile (606) memory, a communication interface (608), communicatively connected via one or more data lines and/or buses (610), wherein the product (P) further comprises a secure memory area (606a) for storing a life cycle stage index counter value, wherein the non-volatile memory (606) stores computer program instructions which, when executed by the microprocessor (602), configure the product (P) to execute steps of the method of one of claims1, 4 or 6.

8. A computer program product comprising computer program instructions which, when executed by a computer, cause the computer to execute the methods of one or more of claims 1-6.

9. A computer readable medium retrievably storing the computer program product of claim 8.

## Patentansprüche

1. Verfahren (300) zum sicheren Übergang einer Lebenszyklusphase eines Produkts (P) in eine Ziel-Lebenszyklusphase in ausschließlich vorwärtsgerichteter Richtung unter Verwendung einer auf einem Merkle-Baum basierenden Datenstruktur (100), wobei die Datenstruktur (100) umfasst:
- einen Lebenszyklusphasenindex (i),
- einen Hashwert erster Ebene (H) oder eine Referenz auf den Hashwert erster Ebene (H),
- mindestens einen Hashwert zweiter Ebene (H0, H1, H2) oder eine Referenz auf den mindestens einen Hashwert zweiter Ebene (H0, H1, H2),
- einen Hashwert dritter Ebene (#(D₀), #(D₁), #(D₂), #(D₃), #(D₄), #(D₅)) sowie einen weiteren Hashwert dritter Ebene (#(D₀), #(D₁), #(D₂), #(D₃), #(D₄), #(D₅)) oder eine entsprechende Referenz (H0-0, H0-1, H1-0, H1-1, H2-0, H2-1) auf letzteren, wobei die Hashwerte dritter Ebene (#(D₀), #(D₁), #(D₂), #(D₃), #(D₄), #(D₅)), Hashes der jeweils mit einem jeweiligen Wert des Lebenszyklusphasenindex (i) assoziierten sensitiven Daten darstellen, und
- einen Kontroll-Hashwert (CTRL), wobei der Kontroll-Hash ein Hashwert der Verkettung des Indexfelds (i), des Hashwerts erster Ebene (H) oder der Referenz darauf, des mindestens einen Hashwerts zweiter Ebene (H0, H1, H2) oder der Referenz darauf, des Hashwerts dritter Ebene (#(D₀), #(D₁), #(D₂), #(D₃), #(D₄), #(D₅)) und des weiteren Hashwerts dritter Ebene (#(D₀), #(D₁), #(D₂), #(D₃), #(D₄), #(D₅)) oder der Referenz (H0-0, H0-1, H1-0, H1-1, H2-0, H2-1) darauf ist,
**dadurch gekennzeichnet, dass** das Verfahren (300) umfasst:
a) Erhalten (302) einer Anforderung von einer anfordernden Entität (RE) und an dem Produkt (P), einen aktuellen Lebenszyklusphasenindex (i_{c}) bereitzustellen,
b) Bereitstellen (304) des aktuellen Lebenszyklusphasenindex (i_{c}) und eines Lebenszykluszertifikats, das die Datenstruktur (100) implementiert, an die anfordernde Entität (RE),
c) Erhalten (306) einer Anforderung an dem Produkt (P), in eine Ziel-Lebenszyklusphase überzugehen,
d) Überprüfen (308), ob der Ziel-Lebenszyklusphasenindex (it) größer ist als der aktuelle Lebenszyklusphasenindex (i_{c}),
wobei, falls der Ziel-Lebenszyklusphasenindex (it) größer ist als der aktuelle Lebenszyklusphasenindex (i_{c}), das Verfahren umfasst:
e) Setzen (310) des in der Anforderung empfangenen Ziel-Lebenszyklusphasenindex (it) als aktuellen Lebenszyklusphasenindex (i_{c}),
f) Speichern (312) neuer sensitiver Daten im Produkt (P), die die mit dem vorherigen Lebenszyklusphasenindex assoziierten sensitiven Daten ersetzen,
g) Generieren (314) und zumindest temporäres Speichern eines Hashwerts dritter Ebene, der die neuen sensitiven Daten repräsentiert,
h) Bestimmen (316) von Informationen zum Erzeugen eines neuen Lebenszykluszertifikats, das eine Datenstruktur (100) gemäß Anspruch 1 oder 2 implementiert, und Erzeugen des neuen Lebenszykluszertifikats,
i) Bereitstellen (318) des aktuellen Lebenszyklusphasenindex (i_{c}) und des in Schritt h) erzeugten neuen Lebenszykluszertifikats an die anfordernde Entität (RE),
oder wobei, falls der Ziel-Lebenszyklusphasenindex (it) nicht größer ist als der aktuelle Lebenszyklusphasenindex (i_{c}), umfasst das Verfahren:
i) Ignorieren (320) der Anforderung.

2. Verfahren (300) nach Anspruch 1, ferner umfassend:
k) Bestimmen (322) in der anfordernden Entität (RE) und auf Basis des in Schritt b) bereitgestellten Lebenszyklusphasenindex und des Lebenszykluszertifikats sowie aus der Ziel-Lebenszyklusphase und den an das Produkt (P) übertragenen sensitiven Daten eines Lebenszykluszertifikats, und
1) Vergleichen (324) des in Schritt j) bestimmten Lebenszykluszertifikats mit dem vom Produkt (P) in Schritt h) bereitgestellten Lebenszykluszertifikat,
wobei, falls das bestimmte und das bereitgestellte Lebenszykluszertifikat identisch sind, der Übergang erfolgreich abgeschlossen ist.

3. Verfahren (300) nach einem der Ansprüche 1 oder 2, wobei die Hashwerte der Datenstruktur (100) gemäß kryptografischen Hashfunktionen, einschließlich SHA-256-, SHA-512- oder SHAKE-Hashfunktionen, oder mit speziellen Betriebsarten symmetrischer Block- oder Stromchiffren zum Berechnen kryptografischer Hashwerte, vorzugsweise mit einer Breite von mindestens 128 Bit, bestimmt werden.

4. Verfahren (400) zum Überprüfen der Gültigkeit eines Lebenszykluszertifikats eines Produkts unter Verwendung einer auf einem Merkle-Baum basierenden Datenstruktur (100), wobei die Datenstruktur (100) umfasst:
- einen Lebenszyklusphasenindex (i),
- einen Hashwert erster Ebene (H) oder eine Referenz auf den Hashwert erster Ebene (H),
- mindestens einen Hashwert zweiter Ebene (H0, H1, H2) oder eine Referenz auf den mindestens einen Hashwert zweiter Ebene (H0, H1, H2),
- einen Hashwert dritter Ebene (#(D₀), #(D₁), #(D₂), #(D₃), #(D₄), #(D₅)) sowie einen weiteren Hashwert dritter Ebene (#(D₀), #(D₁), #(D₂), #(D₃), #(D₄), #(D₅)) oder eine entsprechende Referenz (H0-0, H0-1, H1-0, H1-1, H2-0, H2-1) auf letzteren, wobei die Hashwerte dritter Ebene (#(D₀), #(D₁), #(D₂), #(D₃), #(D₄), #(D₅)), Hashes der jeweils mit einem jeweiligen Wert des Lebenszyklusphasenindex (i) assoziierten sensitiven Daten darstellen, und
- einen Kontroll-Hashwert (CTRL), wobei der Kontroll-Hash ein Hashwert der Verkettung des Indexfelds (i), des Hashwerts erster Ebene (H) oder der Referenz darauf, des mindestens einen Hashwerts zweiter Ebene (H0, H1, H2) oder der Referenz darauf, des Hashwerts dritter Ebene (#(D₀), #(D₁), #(D₂), #(D₃), #(D₄), #(D₅)) und des weiteren Hashwerts dritter Ebene (#(D₀), #(D₁), #(D₂), #(D₃), #(D₄), #(D₅)) oder der Referenz (H0-0, H0-1, H1-0, H1-1, H2-0, H2-1) darauf ist,
**dadurch gekennzeichnet, dass** das Verfahren (400) umfasst:
- Erhalten (402) einer Anforderung von einer anfordernden Entität (RE) und an dem Produkt (P) zur Überprüfung eines Lebenszykluszertifikats, das die Datenstruktur (100) implementiert,
- sofern das zu überprüfende Lebenszykluszertifikat nicht zusammen mit der Anforderung empfangen wurde, Empfangen (404) des zu überprüfenden Lebenszykluszertifikats von der anfordernden Entität (RE) und an dem Produkt (P),
- Vergleichen (406) des im empfangenen Lebenszykluszertifikat enthaltenen Lebenszyklusphasenindex (i) mit einem aktuellen Lebenszyklusphasenindex (i_{c}) des Produkts (P), und falls die Lebenszyklusphasenindizes (i, i_{c}) gleich sind:
- Vergleichen (408) an dem Produkt (P) des empfangenen Lebenszykluszertifikats mit einem aus einem Speicher des Produkts (P) abgerufenen oder vom Produkt (P) auf Grundlage von im Speicher des Produkts (P) gespeicherten Informationen generierten Lebenszykluszertifikat, und, wenn die Lebenszykluszertifikate identisch sind:
- Antworten (410) an die anfordernde Entität (RE), dass das Lebenszykluszertifikat gültig ist,
oder
falls die Lebenszyklusphasenindizes nicht gleich sind oder falls die Lebenszykluszertifikate nicht identisch sind:
- Antworten (412) an die anfordernde Entität (RE), dass das Lebenszykluszertifikat ungültig ist.

5. Verfahren (400) nach Anspruch 4, wobei die Hashwerte der Datenstruktur (100) gemäß kryptografischen Hashfunktionen bestimmt werden, einschließlich SHA-256-, SHA-512- oder SHAKE-Hashfunktionen, oder mit spezieller Betriebsarten symmetrischer Block- oder Stromchiffren zum Berechnen kryptografischer Hashwerte vorzugsweise mit einer Breite von mindestens 128 Bit.

6. Verfahren (300, 400) nach einem der vorstehenden Ansprüche 1 bis 5, ferner umfassend:
- Ausführen eines Zugriffskontrollschemas zum Authentifizieren und/oder Autorisieren zwischen der anfordernden Entität (RE) und dem Produkt (P), und
- Annehmen einer Anforderung im Produkt (P) nach erfolgreicher Authentifizierung und/oder Autorisierung oder
- Zurückweisen der Anforderung.

7. Produkt (P), umfassend einen Mikroprozessor (602), einen flüchtigen (604) und einen nicht-flüchtigen (606) Speicher, eine Kommunikationsschnittstelle (608), kommunikativ über eine oder mehrere Datenleitungen und/oder Busse (610) verbunden, wobei das Produkt (P) ferner einen sicheren Speicherbereich (606a) zum Speichern eines Lebenszyklusphasenindex-Zählerwerts umfasst, wobei der nicht-flüchtige Speicher (606) Computerprogramm-Anweisungen speichert, die, wenn sie vom Mikroprozessor (602) ausgeführt werden, das Produkt (P) dazu konfigurieren, die Schritte des Verfahrens nach einem der Ansprüche 1, 4 oder 6 auszuführen.

8. Computerprogramm-Produkt, umfassend Computerprogramm-Anweisungen, die, wenn sie von einem Computer ausgeführt werden, den Computer veranlassen, die Verfahren nach einem oder mehreren der Ansprüche 1 bis 6 auszuführen.

9. Computerlesbares Medium, auf dem das Computerprogramm-Produkt nach Anspruch 8 abrufbar gespeichert ist.

## Revendications

1. Procédé (300) de transition sécurisée d'une étape de cycle de vie d'un produit (P) à une étape de cycle de vie cible dans une direction directe uniquement à l'aide d'une structure de données basée sur un arbre de Merkle (100), la structure de données (100) comprenant :
- un indice de stade de cycle de vie (i),
- une valeur de hachage de premier niveau (H) ou une référence à la valeur de hachage de premier niveau (H),
- au moins une valeur de hachage de deuxième niveau (H0, H1, H2) ou une référence à l'au moins une valeur de hachage de deuxième niveau (H0, H1, H2),
- une valeur de hachage de troisième niveau (#(D₀), #(D₁), #(D₂), #(D₃), #(D₄), #(D₅)), et une autre valeur de hachage de troisième niveau (#(D₀), #(D₁), #(D₂), #(D₃), #(D₄), #(D₅)) ou une référence correspondante (H0-0, H0-1, H1-0, H1-1, H2-0, H2-1) à ce dernier, les valeurs de hachage de troisième niveau (#(D₀), #(D₁), #(D₂), #(D₃), #(D₄), #(D₅)) représentant des hachages de données sensibles correspondantes associées à une valeur respective de l'indice de cycle de vie (i), et
- une valeur de hachage de contrôle (CTRL), le hachage de contrôle étant une valeur de hachage de la concaténation du champ d'indice (i), de la valeur de hachage de premier niveau (H) ou de sa référence, de l'au moins une valeur de hachage de deuxième niveau (H0, H1, H2) ou de sa référence, de la valeur de hachage de troisième niveau (#(D₀), #(D₁), #(D₂), #(D₃), #(D₄), #(D₅)) et de la valeur de hachage de troisième niveau supplémentaire (#(D₀), #(D₁), #(D₂), #(D₃), #(D₄), #(D₅)) ou de la référence (H0-0, H0-1, H1-0, H1-1, H2-0, H2-1),
**caractérisé en ce que** le procédé (300) comprend :
a) la réception (302), en provenance d'une entité requérante (RE) et au niveau du produit (P), d'une requête de fourniture d'un indice de stade de cycle de vie (i_{c}),
b) la fourniture (304), à l'entité requérante (RE), d'un indice de stade de cycle de vie actuel (i_{c}) et d'un certificat de cycle de vie mettant en œuvre la structure de données (100),
c) la réception (306), au niveau du produit (P), d'une requête de transition vers une étape de cycle de vie cible,
d) le fait de vérifier (308) si l'indice de stade de cycle de vie cible (it) est supérieur à l'indice de stade de cycle de vie actuel (i_{c}),
dans lequel, si l'indice de cycle de vie cible (it) est supérieur à un indice de stade de cycle de vie actuel (i_{c}), le procédé comprend :
e) la définition (310) de l'indice de cycle de vie cible (it) reçu dans la requête comme indice de stade de cycle de vie actuel (i_{c}),
f) le stockage (312) de nouvelles données sensibles dans le produit (P) qui remplacent les données sensibles associées à l'indice de stade de cycle de vie précédent,
g) la génération (314) et le stockage au moins temporaire d'une valeur de hachage de troisième niveau représentant les nouvelles données sensibles,
h) la détermination (316) d'informations pour la génération d'un nouveau certificat de cycle de vie mettant en œuvre une structure de données (100) conformément à la revendication 1 ou 2, et la génération du nouveau certificat de cycle de vie,
i) la fourniture (318) de l'indice de stade de cycle de vie actuel (i_{c}) et du nouveau certificat de cycle de vie généré à l'étape h) à l'entité requérante (RE),
ou dans lequel, si l'indice de stade de cycle de vie cible (it) n'est pas supérieur à un indice de stade de cycle de vie actuel (i_{c}), le procédé comprend :
i) le fait d'ignorer (320) la requête.

2. Procédé (300) selon la revendication 1, comprenant également :
k) le fait de déterminer (322), dans l'entité requérante (RE) et sur la base de l'indice de stade de cycle de vie et du certificat du cycle de vie fournis à l'étape b) ainsi que du stade de cycle de vie cible et des données sensibles transmises au produit (P), un certificat du cycle de vie, et
l) la comparaison (324) du certificat de cycle de vie déterminé à l'étape j) avec le certificat de cycle de vie fourni par le produit (P) à l'étape h),
dans lequel, si les certificats de cycle de vie déterminés et fournis sont identiques, la transition est terminée avec succès.

3. Procédé (300) de l'une des revendications 1 ou 2, dans lequel les valeurs de hachage de la structure de données (100) sont déterminées conformément à des fonctions de hachage cryptographique comportant des fonctions de hachage SHA-256, SHA-512 ou SHAKE, ou à des modes de fonctionnement spéciaux de chiffrement symétrique de bloc ou de flux pour calculer des valeurs de hachage cryptographique de préférence d'au moins 128 bits de largeur.

4. Procédé (400) de vérification de la validité d'un certificat de cycle de vie d'un produit à l'aide d'une structure de données basée sur un arbre de Merkle (100), la structure de données (100) comprenant :
- un indice de stade de cycle de vie (i),
- une valeur de hachage de premier niveau (H) ou une référence à la valeur de hachage de premier niveau (H),
- au moins une valeur de hachage de deuxième niveau (H0, H1, H2) ou une référence à l'au moins une valeur de hachage de deuxième niveau (H0, H1, H2),
- une valeur de hachage de troisième niveau (#(D₀), #(D₁), #(D₂), #(D₃), #(D₄), #(D₅)), et une autre valeur de hachage de troisième niveau (#(D₀), #(D₁), #(D₂), #(D₃), #(D₄), #(D₅)) ou une référence correspondante (H0-0, H0-1, H1-0, H1-1, H2-0, H2-1) à ce dernier, les valeurs de hachage de troisième niveau (#(D₀), #(D₁), #(D₂), #(D₃), #(D₄), #(D₅)) représentant des hachages de données sensibles correspondantes associées à une valeur respective de l'indice de cycle de vie (i), et
- une valeur de hachage de contrôle (CTRL), le hachage de contrôle étant une valeur de hachage de la concaténation du champ d'indice (i), de la valeur de hachage de premier niveau (H) ou de sa référence, de l'au moins une valeur de hachage de deuxième niveau (H0, H1, H2) ou de sa référence, de la valeur de hachage de troisième niveau (#(D₀), #(D₁), #(D₂), #(D₃), #(D₄), #(D₅)) et de la valeur de hachage de troisième niveau supplémentaire (#(D₀), #(D₁), #(D₂), #(D₃), #(D₄), #(D₅)) ou de la référence (H0-0, H0-1, H1-0, H1-1, H2-0, H2-1),
**caractérisé en ce que** le procédé (400) comprend :
- la réception (402), en provenance d'une entité requérante (RE) et au niveau du produit (P), d'une requête de vérification d'un certificat de cycle de vie mettant en œuvre la structure de données (100),
- si le certificat de cycle de vie à vérifier n'a pas été reçu avec la requête, la réception (404), en provenance de l'entité requérante (RE) et au niveau du produit (P), du certificat de cycle de vie à vérifier,
- la comparaison (406) de l'indice de stade de cycle de vie (i) inclus dans le certificat de cycle de vie reçu avec un indice de stade de cycle de vie courant (i_{c}) du produit (P), et si les indices de cycle de vie (i, i_{c}) sont égaux :
- la comparaison (408), au niveau du produit (P), du certificat de cycle de vie reçu avec un certificat de cycle de vie récupéré à partir d'une mémoire du produit (P) ou généré par le produit (P) sur la base d'informations stockées dans une mémoire du produit (P), et si les certificats de cycle de vie sont identiques :
- le fait de répondre (410), à l'entité requérante (RE), que le certificat de cycle de vie est valide,
ou
si les indices d'étape de cycle de vie ne sont pas égaux ou si les certificats de cycle de vie ne sont pas identiques :
- le fait de répondre (412), à l'entité requérante (RE), que le certificat de cycle de vie est invalide.

5. Procédé (400) selon la revendication 4, dans lequel les valeurs de hachage de la structure de données (100) sont déterminées conformément à des fonctions de hachage cryptographique comportant des fonctions de hachage SHA-256, SHA-512 ou SHAKE, ou à des modes de fonctionnement spéciaux de chiffrement symétrique de bloc ou de flux pour calculer des valeurs de hachage cryptographique de préférence d'au moins 128 bits de largeur.

6. Procédé (300, 400) de l'une quelconque des revendications 1 à 5 précédentes, comprenant également :
- l'exécution d'un schéma de contrôle d'accès pour authentifier et/ou autoriser entre l'entité requérante (RE) et le produit (P), et
- l'acceptation d'une requête dans le produit (P) après une authentification et/ou une autorisation réussie ou
- le rejet de la requête.

7. Produit (P) comprenant un microprocesseur (602), une mémoire volatile (604) et une mémoire non volatile (606), une interface de communication (608), connectée en communication par l'intermédiaire d'une ou de plusieurs lignes de données et/ou bus (610), dans lequel le produit (P) comprend également une zone mémoire sécurisée (606a) pour stocker une valeur de compteur d'indice de stade de cycle de vie, dans lequel la mémoire non volatile (606) stocke des instructions de programme informatique qui, lorsqu'elles sont exécutées par le microprocesseur (602), configurent le produit (P) pour exécuter des étapes du procédé de l'une des revendications 1, 4 ou 6.

8. Produit de programme informatique comprenant des instructions de programme informatique qui, lorsqu'elles sont exécutées par un ordinateur, amènent l'ordinateur à exécuter les procédés d'une ou de plusieurs des revendications 1 à 6.

9. Support lisible par ordinateur stockant de manière récupérable le programme informatique produit selon la revendication 8.
